# EUROPEAN PATENT APPLICATION

(11) **EP 4 019 649 A1**
(43) Date of publication of application: **29.06.2022**
(21) Application number: 20854786.9
(22) Date of filing: 21.08.2020
(51) Int. Cl.: C13K 13/00

(54) **METHOD FOR SEPARATING XYLOSE AND LIGNIN FROM MIXED SUGAR SOLUTION**

(30) Priority: 22.08.2019 CN 201910779821
(71) Applicant: Healtang Biotech Co., Ltd., Zhangqiu Jinan City Shandong 250204 (CN)
(72) Inventor: JIANG, Chengzhen, Jinan City Shandong 250204 (CN); GAO, Shaofeng, Jinan City Shandong 250204 (CN); SHI, Feng, Jinan City Shandong 250204 (CN)
(74) Representative: Ipside
(86) International application number: PCT/CN2020/110555
(87) International publication number: WO 2021/032195

(57) **Abstract**

The present invention relates to a method for separating hemicellulose and lignin from a miscellaneous sugar liquid, in particular to a method for separating xylose and lignin from a miscellaneous sugar liquid. The method of the present invention solves the problem of lignin carbonization and fouling in the hydrolysis reaction process of the miscellaneous sugar liquid mixed solution. By adding an organic solvent, the lignin separated out in the hydrolysis reaction process is dissolved in the organic solvent component, so the situation that the carbonization and fouling of lignin in a reactor generates substances unfavorable for actual production is avoided. Moreover, the lignin is well protected in the organic solvent, and the lignin obtained in a later period has high reaction activity and excellent performance.

## Description

### Technical Field

The present invention belongs to the field of comprehensive utilization of biomass. Specifically, the present invention relates to a method for separating hemicellulose and lignin from a miscellaneous sugar liquid, in particular to a method for separating xylose and lignin from a miscellaneous sugar liquid.

### Background of the Invention

Currently, deep processing of biomass mainly utilizes cellulose. For example, in conventional pulp production, hemicellulose and lignin parts are usually used as waste liquid, or sold as low-value products or burned to generate heat, and cannot be used at high value. In the conventional xylose production process, only the hemicellulose part is used to prepare pure xylose, and the lignin part and the cellulose are burned as waste residues.

Chinese patent CN109234468A relates to a method for extracting xylose and lignin by utilizing hydrolysate generated in a production process of dissolving pulp. This patent mentions a method for extracting xylose and lignin from a miscellaneous sugar liquid. The hydrolysis reaction of the miscellaneous sugar liquid adopts single-phase (water phase) hydrolysis, and after the hydrolysis is completed, the lignin is obtained by concentration and filtration. In this patent, the single-phase hydrolysis reaction is carried out at 120-180°C in an acidic environment, so the lignin is easily coked and carbonized, affecting the normal production. Moreover, the lignin obtained by concentration and filtration in a later period is changed in structure at a high temperature and contains partially carbonized lignin, so the purity is relatively low.

Chinese patent CN108411044A relates to an ultrasonic-assisted method for purifying xylose in eucalyptus hot water pre-hydrolysis liquor. This patent provides an ultrasonic-assisted method for extracting xylose mainly by adsorbing lignin in a miscellaneous sugar liquid with activated carbon. In this patent, the adsorption of lignin with activated carbon is costly, and the analysis of lignin and the regeneration of activated carbon after adsorption are not mentioned.

### Summary of the Invention

Therefore, a first technical problem to be solved by the present invention is to provide a method for extracting xylose and lignin, in order to solve the problem of lignin fouling in the hydrolysis reaction process of a miscellaneous sugar liquid in the prior art.

A second technical problem to be solved by the present invention is to provide a method for extracting xylose and lignin, and the method can obtain lignin with high purity, high reaction activity and excellent performance.

A third technical problem to be solved by the present invention is to provide a method for extracting xylose and lignin, and the method is simple in operation, low in production cost and favorable for actual production.

In view of the above problems, the present invention provides a method for separating xylose and lignin from a miscellaneous sugar liquid, including the following steps:
hydrolysis step:
adding the miscellaneous sugar liquid and a solvent to a reactor, adding an acid catalyst, and carrying out a hydrolysis reaction; and
separation step:
   after the hydrolysis reaction is completed, separating the solvent phase from the water phase, and
   carrying out chromatography, ion exchange and crystallization on the separated water phase to obtain the pure xylose; and
   recycling the separated solvent phase moiety for the next batch of hydrolysis step, and after a solid content in the solvent reaches 50% or above, using a vacuum evaporation facility to recover the solvent, reusing the recovered solvent as the solvent for the hydrolysis step, and obtaining the pure lignin after recovering the solvent by vacuum evaporation.

Preferably, the miscellaneous sugar liquid includes a sugar component accounting for 20-40% of the total miscellaneous sugar liquid. A monosaccharide in the sugar component accounts for 5-15% of the total sugar component, and a polysaccharide accounts for 85-95% of the total sugar component.

In addition to the monosaccharide and the polysaccharide, the miscellaneous sugar liquid includes lignin accounting for 60-70% of the total miscellaneous sugar liquid and a dissolved salt component.

Preferably, the solvent used in the hydrolysis step includes: one or a combination of two or more of MIBK (also known as "methyl isobutyl ketone"), n-butanol, toluene and isophorone (also known as "1,1,3-trimethylcyclohexenone").

Preferably, in the hydrolysis step, a mass ratio of the miscellaneous sugar liquid to the solvent is 1:1-4:1.

Preferably, in the hydrolysis step, the acid catalyst includes: one or a combination of two or more of sulfuric acid, hydrochloric acid, nitric acid and phosphoric acid.

Preferably, in the hydrolysis step, relative to the total mass of the miscellaneous sugar liquid, the acid catalyst is in an amount of 3-6% by mass of the miscellaneous sugar liquid.

Preferably, in the hydrolysis step, the hydrolysis reaction is carried out at 90-120°C for 1-5 h.

Preferably, in the separation step, the separated solvent phase moiety may be recycled for the hydrolysis step for up to 8 times. When the solid content in the solvent phase reaches 50% or above, the vacuum evaporation facility is used to recover the solvent and separate the lignin.

Preferably, in the separation step, a solvent recovery rate is up to 99.5% or above.

Compared with the prior art, the technical solution of the present invention has the following advantages:
1. The present invention mainly solves the problem of lignin carbonization and fouling in the hydrolysis reaction process of the miscellaneous sugar liquid mixed solution.
2. By adding an organic solvent, the lignin separated out in the hydrolysis reaction process is dissolved in the organic solvent component, so the situation that the carbonization and fouling of lignin in a reactor generates substances unfavorable for actual production is avoided.
3. The lignin is well protected in the organic solvent, and the lignin obtained in a later period has high reaction activity and excellent performance.
4. The yield of lignin is higher than 90%, and the lignin has high purity and high economic value.

### Brief Description of the Drawings

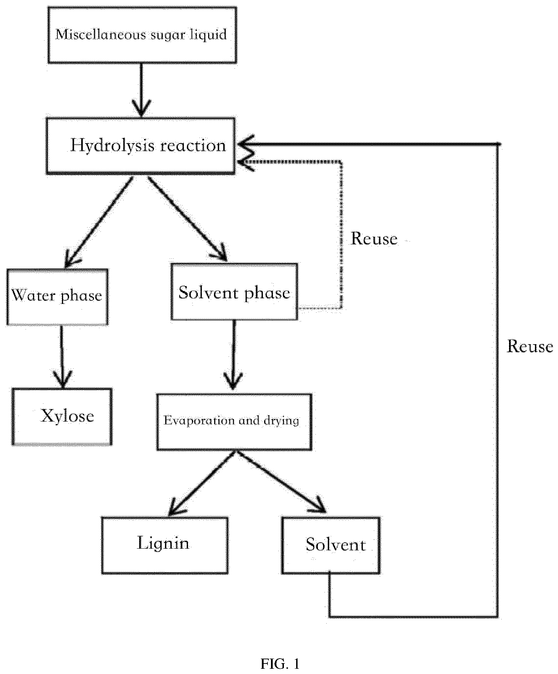

FIG. 1 is a process flow diagram of the present invention.

### Detailed Description of Embodiments

In one embodiment, the miscellaneous sugar liquid includes a sugar component accounting for 0.1-99% of the total miscellaneous sugar liquid. In one embodiment, the miscellaneous sugar liquid includes a sugar component accounting for 1-50% of the total miscellaneous sugar liquid. In one embodiment, the miscellaneous sugar liquid includes a sugar component accounting for 5-50% of the total miscellaneous sugar liquid. In one embodiment, the miscellaneous sugar liquid includes a sugar component accounting for 10-40% of the total miscellaneous sugar liquid. In one embodiment, the miscellaneous sugar liquid includes a sugar component accounting for 20-40% of the total miscellaneous sugar liquid. In one embodiment, a monosaccharide in the sugar component accounts for 1-30% of the total sugar component. In one embodiment, a monosaccharide in the sugar component accounts for 5-15% of the total sugar component. In one embodiment, a polysaccharide accounts for 70-99% of the total sugar component. In one embodiment, a polysaccharide accounts for 85-95% of the total sugar component.

In this application, the "miscellaneous sugar liquid" means that: a biomass raw material (including but not limited to wood chips, reed, rice straw and other straws) is hydrolyzed in hot water or hot acid, such that hemicellulose, part of lignin and a small amount of cellulose are dissolved into the aqueous solution, thereby obtaining the miscellaneous sugar liquid.

In one embodiment, in addition to the monosaccharide and the polysaccharide, the miscellaneous sugar liquid includes lignin accounting for 50-80% of the total miscellaneous sugar liquid and a dissolved salt component. In one embodiment, in addition to the monosaccharide and the polysaccharide, the miscellaneous sugar liquid includes lignin accounting for 60-70% of the total miscellaneous sugar liquid and a dissolved salt component.

In one embodiment, the miscellaneous sugar liquid has a pH of 1-5. In one embodiment, the miscellaneous sugar liquid has a pH of 2-4. In one embodiment, the miscellaneous sugar liquid has a pH of 2.5-3.5.

In one embodiment, the solvent used in the hydrolysis step includes one or a combination of two or more of MIBK, n-butanol, toluene and isophorone. In one embodiment, the solvent used in the hydrolysis step is any one of MIBK, n-butanol, toluene and isophorone. In one embodiment, the solvent used in the hydrolysis step is MIBK. In one embodiment, the solvent used in the hydrolysis step is n-butanol. In one embodiment, the solvent used in the hydrolysis step is toluene. In one embodiment, the solvent used in the hydrolysis step is isophorone.

In one embodiment, the hydrolysis reaction is carried out at 90-120°C. In one embodiment, the hydrolysis reaction is carried out at 90-110°C.

In the prior art, the hydrolysis reaction is carried out at 120-180°C in an acidic environment. The inventors found that using such a high temperature, although there are some advantages such as less acid consumption, the disadvantages are more obvious. At such a high temperature, the lignin in the miscellaneous sugar liquid has been carbonized and coked, so the lignin is easily coked and carbonized, affecting the normal production. The lignin obtained by concentration and filtration in a later period is changed in structure at a high temperature and contains partially carbonized lignin, so the purity is relatively low. In the prior art, most of solutions to lignin coking and fouling in the hydrolytic process are to sulfonate lignin into water-soluble lignosulfonate and then carry out separation, but this process is complex and costly. The inventors tried to appropriately lower the temperature, for example, to 90-120°C, preferably 90-110°C, for the hydrolysis reaction and add a certain solvent. This solution can solve the problem of lignin carbonization and fouling, and the method is simple and less costly.

The solvent used in the present invention, such as MIBK (also known as "methyl isobutyl ketone"), n-butanol, toluene and isophorone (also known as "1,1,3-trimethylcyclohexenone"), has a high dissolving power for lignin, making a high separation efficiency of hemicellulose and lignin.

In one embodiment, the hydrolysis reaction is carried out for 1-5 h. In one embodiment, the hydrolysis reaction is carried out for 1-4 h. In one embodiment, the hydrolysis reaction is carried out for 2-4 h. In one embodiment, the hydrolysis reaction is carried out for 1 h, 1.5 h, 2 h, 2.5 h, 3 h, 3.5 h, 4 h, 4.5 h or 5 h.

In one embodiment, in the hydrolysis step, the acid catalyst includes: sulfuric acid, hydrochloric acid, nitric acid and phosphoric acid. In one embodiment, in the hydrolysis step, the acid catalyst is sulfuric acid. In one embodiment, in the hydrolysis step, the acid catalyst is hydrochloric acid. In one embodiment, in the hydrolysis step, the acid catalyst is nitric acid. In one embodiment, in the hydrolysis step, the acid catalyst is phosphoric acid. In one embodiment, in the hydrolysis step, it is also feasible to use other common acid catalysts, such as sulfur dioxide.

In one embodiment, in the separation step, a vacuum evaporation facility is used to recover the solvent from the separated solvent phase moiety, and the recovered solvent can be reused as the solvent for the hydrolysis step for up to 8 times. This also reflects a high dissolving power of the solvent for lignin and a high economic feasibility of the solution.

In one embodiment, in the separation step, after a solid content in the separated solvent phase moiety reaches 50% or above, the vacuum evaporation facility is used to recover the solvent. In the solvent recycling process, the solid content in the organic phase increases gradually, and when the solid content reaches 50% or above, the vacuum evaporation and concentration facility is used to recover the solvent and the lignin.

The "solid content" in this application refers to the percentage by weight of solids in the solvent phase.

In one embodiment, in the separation step, a solvent recovery rate is up to 99.5% or above. The solvent recovery rate refers to the pure solvent allowed to be recovered. Here, the solvent recovery rate refers to the percentage of the recovered solvent in the total amount of the initially added solvent. As can be seen, by using the method of the present invention, up to 99.5% of the initial solvent can be recycled and reused.

By using the method of the present invention, xylose and lignin can be efficiently recovered at the same time. The xylose extraction rate reaches 85% or above, and the lignin recovery rate can reach 90% or above. Here, the xylose extraction rate is obtained by calculating the xylose content in the original liquid based on the content of distilled aldehyde in the miscellaneous sugar liquid and then dividing the total amount of xylose after hydrolysis by the total amount of xylose in the miscellaneous sugar liquid before hydrolysis. The lignin recovery rate is obtained by dividing the total amount of lignin powder obtained after rotary evaporation and drying by the total amount of lignin in the original liquid. As can be seen, by using the method of the present invention, xylose can be extracted at a high extraction rate, and at the same time, lignin can be recovered at a high lignin recovery rate.

In this application, the mass fraction of "distilled aldehyde" means that: a certain mass of miscellaneous sugar liquid is weighed and azeotropically boiled with 12% hydrochloric acid such that pentosan in the miscellaneous sugar liquid is hydrolyzed to into pentoses, the pentoses are further dehydrated into furfural, the distilled furfural is condensed and collected into a receiving bottle, and the percentage of distilled furfural is quantitatively determined by volumetric analysis or colorimetric analysis, which is called the mass fraction of "distilled aldehyde". For specific determination methods, reference is made to the national standard GB/T2677.9-1994.

In order to make the objectives, technical solutions and advantages of the present invention clearer, the present invention will be further described in detail below with reference to specific examples.

### Example 1

(1) The miscellaneous sugar liquid had a pH of 3.10, a solid content of 8.90% and a distilled aldehyde content of 1.81%.
   The miscellaneous sugar liquid mainly included: 1.30% of xylose, 0.30% of glucose, 0.13% of galactose and 0.30% of arabinose; 1.08% of xylan; and 5.16% of lignin.
   Contents of components in the miscellaneous sugar liquid in the examples and comparative examples are determined by conventional methods in the art.
(2) 500 g of miscellaneous sugar liquid was added to a 2 L four-necked flask, followed by the addition of 500 g of isophorone and 25 g of sulfuric acid. Stirring was started, the temperature was raised to 95°C, and the mixture was held to react for 3 h. After the completion of the holding, circulating water was started for cooling. After the temperature was decreased to room temperature, the mixed solution was placed in a separating funnel and allowed to stand for 2 h. 463 g of water phase and 537 g of solvent phase were obtained after separation.
(3) The water phase contained 0.29% of glucose, 2.77% of xylose, 0.13% of galactose and 0.31% of arabinose. The xylose extraction rate reached 88.14%. The water phase was processed into pure xylose by the existing xylose production technique.
(4) The organic phase, having a solid content of 6.89%, was directly reused for the next miscellaneous sugar liquid hydrolysis process. When the solid content in the organic phase reached 50% or so, vacuum concentration and drying was carried out to obtain the lignin solid. The lignin recovery rate could reach 90% or above.

### Example 2

(1) The miscellaneous sugar liquid had a pH of 3.10, a solid content of 8.90% and a distilled aldehyde content of 1.81%.
   The miscellaneous sugar liquid mainly included: 1.30% of xylose, 0.30% of glucose, 0.13% of galactose and 0.30% of arabinose; 1.08% of xylan; and 5.16% of lignin.
(2) 500 g of miscellaneous sugar liquid was added to a 1 L four-necked flask, followed by the addition of 250 g of isophorone and 30 g of sulfuric acid. Stirring was started, the temperature was raised to 105°C, and the mixture was held to react for 2 h. After the completion of the holding, circulating water was started for cooling. After the temperature was decreased to room temperature, the mixed solution was placed in a separating funnel and allowed to stand for 2 h. 467 g of water phase and 283 g of solvent phase were obtained after separation.
(3) The water phase contained 0.16% of glucose, 2.89% of xylose, 0.13% of galactose and 0.29% of arabinose. The xylose extraction rate reached 91.57%. The water phase was processed into pure xylose by the existing xylose technique.
(4) The organic phase, having a solid content of 11.67%, was directly reused for the next miscellaneous sugar liquid hydrolysis process. When the solid content in the organic phase reached 50% or so, vacuum concentration and drying was carried out to obtain the lignin solid. The lignin recovery rate could be reach 90% or above.

### Example 3

(1) The miscellaneous sugar liquid had a pH of 3.31, a solid content of 10.19% and a distilled aldehyde content of 2.11%.
   The miscellaneous sugar liquid mainly included: 1.80% of xylose, 0.30% of glucose, 0.13% of galactose and 0.29% of arabinose; 1.01% of xylan; and 5.98% of lignin.
(2) 500 g of miscellaneous sugar liquid was added to a 2 L four-necked flask, followed by the addition of 500 g of n-butanol and 25 g of sulfuric acid. Stirring was started, the temperature was raised to 110°C, and the mixture was held to react for 3 h. After the completion of the holding, circulating water was started for cooling. After the temperature was decreased to room temperature, the mixed solution was placed in a separating funnel and allowed to stand for 2 h. 459 g of water phase and 541 g of solvent phase were obtained after separation.
(3) The water phase contained 0.36% of glucose, 3.38% of xylose, 0.12% of galactose and 0.33% of arabinose. The xylose extraction rate reached 90.58%. The water phase was processed into pure xylose by the existing xylose production technique.
(4) The organic phase, having a solid content of 7.55%, was directly reused for the next miscellaneous sugar liquid hydrolysis process. When the solid content in the organic phase reached 50% or so, vacuum concentration and drying was carried out to obtain the lignin solid. The lignin recovery rate could reach 90% or above.

### Example 4

(1) The miscellaneous sugar liquid had a pH of 3.31, a solid content of 10.19% and a distilled aldehyde content of 2.11%.
   The miscellaneous sugar liquid mainly included: 1.80% of xylose, 0.26% of glucose, 0.13% of galactose and 0.49% of arabinose; 1.01% of xylan; and 5.98% of lignin.
(2) 500 g of miscellaneous sugar liquid was added to a 2 L four-necked flask, followed by the addition of 500 g of MIBK and 20 g of sulfuric acid. Stirring was started, the temperature was raised to 98°C, and the mixture was held to react for 4 h. After the completion of the holding, circulating water was started for cooling. After the temperature was decreased to room temperature, the mixed solution was placed in a separating funnel and allowed to stand for 2 h. 462 g of water phase and 538 g of solvent phase were obtained after separation.
(3) The water phase contained 0.26% of glucose, 3.17% of xylose, 0.13% of galactose and 0.48% of arabinose. The xylose extraction rate reached 90.17%. The water phase was processed into pure xylose by the existing xylose production technique.
(4) The organic phase, having a solid content of 7.06%, was directly reused for the next miscellaneous sugar liquid hydrolysis process. When the solid content in the organic phase reached 50% or so, vacuum concentration and drying was carried out to obtain the lignin solid. The lignin recovery rate could reach 90% or above.

### Example 5

(1) The miscellaneous sugar liquid had a pH of 3.10, a solid content of 8.90% and a distilled aldehyde content of 1.81%.
   The miscellaneous sugar liquid mainly included: 1.20% of xylose, 0.30% of glucose, 0.13% of galactose and 0.35% of arabinose; 1.08% of xylan; and 5.16% of lignin.
(2) 500 g of miscellaneous sugar liquid was added to a 1 L four-necked flask, followed by the addition of 250 g of toluene and 25 g of sulfuric acid. Stirring was started, the temperature was raised to 110°C, and the mixture was held to react for 3 h. After the completion of the holding, circulating water was started for cooling. After the temperature was decreased to room temperature, the mixed solution was placed in a separating funnel and allowed to stand for 2 h. 470 g of water phase and 280 g of solvent phase were obtained after separation.
(3) The water phase contained 0.31% of glucose, 2.65% of xylose, 0.14% of galactose and 0.39% of arabinose. The xylose extraction rate reached 87.84%. The water phase was processed into pure xylose by the existing xylose technique.
(4) The organic phase, having a solid content of 10.71%, was directly reused for the next miscellaneous sugar liquid hydrolysis process. When the solid content in the organic phase reached 50% or so, vacuum concentration and drying was carried out to obtain the lignin solid. The lignin recovery rate could reach 90% or above.

### Comparative Example 1

(1) The miscellaneous sugar liquid had a pH of 3.10, a solid content of 8.90% and a distilled aldehyde content of 1.81%.
   The miscellaneous sugar liquid mainly included: 1.30% of xylose, 0.25% of glucose, 0.13% of galactose and 0.29% of arabinose; 1.08% of xylan; and 5.16% of lignin.
(2) 500 g of miscellaneous sugar liquid was added to a 2 L four-necked flask, followed by the addition of 500 g of isophorone and 25 g of sulfuric acid. Stirring was started, the temperature was raised to 130°C, and the mixture was held to react for 3 h. After the completion of the holding, circulating water was started for cooling. After the temperature was decreased to room temperature, the mixed solution was placed in a separating funnel and allowed to stand for 2 h. 461 g of water phase and 539 g of solvent phase were obtained after separation.
(3) The water phase contained 0.23% of glucose, 2.87% of xylose, 0.11% of galactose and 0.29% of arabinose. The xylose extraction rate reached 90.60%. The water phase was processed into pure xylose by the existing xylose production technique.
(4) The organic phase, having a solid content of 7.23%, was directly reused for the next miscellaneous sugar liquid hydrolysis process. When the solid content in the organic phase reached 50% or so, vacuum concentration and drying was carried out to obtain the lignin solid.

The increase of temperature has no adverse effect on the xylose extraction rate, but affects the purity and application performance of lignin. Specific indicators are shown in the table of test results of lignin.

### Comparative Example 2

(1) The miscellaneous sugar liquid had a pH of 3.10, a solid content of 8.90% and a distilled aldehyde content of 1.81%.
   The miscellaneous sugar liquid mainly included: 1.30% of xylose, 0.30% of glucose, 0.15% of galactose and 0.30% of arabinose; 1.08% of xylan; and 5.16% of lignin.
(2) 500 g of miscellaneous sugar liquid was added to a 2 L four-necked flask, followed by the addition of 500 g of isophorone and 25 g of sulfuric acid. Stirring was started, the temperature was raised to 80°C, and the mixture was held to react for 3 h. After the completion of the holding, circulating water was started for cooling. After the temperature was decreased to room temperature, the mixed solution was placed in a separating funnel and allowed to stand for 2 h. 461 g of water phase and 539 g of solvent phase were obtained after separation.
(3) The water phase contained 0.29% of glucose, 1.07% of xylose, 0.16% of galactose and 0.31% of arabinose. The xylose extraction rate was 39.57%.
(4) The organic phase, having a solid content of 7.24%, was directly reused for the next miscellaneous sugar liquid hydrolysis process. When the solid content in the organic phase reached 50% or so, vacuum concentration and drying was carried out to obtain the lignin solid. The lignin recovery rate could reach 90% or above.

The decrease of temperature was favorable for the extraction of lignin, but the xylose extraction rate was very low. Due to high content of oligosaccharides and low purity of xylose in the xylose solution, it is difficult to produce xylose in subsequent deep processing.

### Comparative Example 3

(1) The miscellaneous sugar liquid had a pH of 3.10, a solid content of 8.90% and a distilled aldehyde content of 1.81%.
   The miscellaneous sugar liquid mainly included: 1.30% of xylose, 0.19% of glucose, 0.13% of galactose and 0.45% of arabinose; 1.08% of xylan; and 5.16% of lignin.
(2) 500 g of miscellaneous sugar liquid was added to a 2 L four-necked flask, followed by the addition of 500 g of ethyl acetate and 25 g of sulfuric acid. Stirring was started, the temperature was raised to 100°C, and the mixture was held to react for 3 h. After the completion of the holding, circulating water was started for cooling. After the temperature was decreased to room temperature, the mixed solution was placed in a separating funnel and allowed to stand for 2 h. 469 g of water phase and 505 g of solvent phase were obtained after separation.
(3) The water phase contained 0.21% of glucose, 1.75% of xylose, 0.13% of galactose and 0.49% of arabinose. The xylose extraction rate reached 64.22%.
(4) The organic phase had a solid content of 0.99%. The amount of lignin dissolved into the organic solvent was very small, and was about 14%. 80% or above of the lignin formed fouling on the wall of the four-necked flask, so the container was fouled seriously. There was also a small amount of lignin mixed and dissolved in the water phase, affecting the xylose extraction rate and also allowing fouling in the subsequent xylose production process.

### Comparative Example 4

(1) The miscellaneous sugar liquid had a pH of 3.10, a solid content of 8.90% and a distilled aldehyde content of 1.81%.
   The miscellaneous sugar liquid mainly included: 1.30% of xylose, 0.30% of glucose, 0.13% of galactose and 0.30% of arabinose; 1.08% of xylan; and 5.16% of lignin.
(2) 500 g of miscellaneous sugar liquid was added to a 2 L four-necked flask, followed by the addition of 500 g of diethyl ether and 25 g of sulfuric acid. Stirring was started, the temperature was raised to 100°C, and the mixture was held to react for 3 h. After the completion of the holding, circulating water was started for cooling. After the temperature was decreased to room temperature, the mixed solution was placed in a separating funnel and allowed to stand for 2 h. 474 g of water phase and 506 g of solvent phase were obtained after separation.
(3) The water phase contained 0.33% of glucose, 1.97% of xylose, 0.15% of galactose and 0.30% of arabinose. The xylose extraction rate reached 65.08%.
(4) The organic phase had a solid content of 1.18%. The amount of lignin dissolved into the organic solvent was very small, and was about 15%. 80% of the lignin formed fouling on the wall of the four-necked flask, so the container was fouled seriously. There was also a small amount of lignin mixed and dissolved in the water phase, affecting the xylose extraction rate and also allowing fouling in the subsequent xylose production process.

### Effect Example

Test results such as yield of lignin obtained in Examples 1-5 and Comparative Examples 1-4 are as follows.

| | Yield of lignin/% | Ash content/% | Average solubility in ethanol/% | Softening point/°C | Phenolic hydroxyl content/% | Weight average molecular weight |
|---|---|---|---|---|---|---|
| Example 1 | 91.58 | 1.33 | 88 | 75-77 | 5.11 | 1185 |
| Example 2 | 90.09 | 1.79 | 91 | 83-85 | 5.06 | 1350 |
| Example 3 | 93.34 | 1.05 | 89 | 80-82 | 4.91 | 1367 |
| Example 4 | 91.34 | 1.65 | 87 | 80-82 | 5.33 | 1090 |
| Example 5 | 90.85 | 1.88 | 91 | 73-75 | 4.80 | 1243 |
| Comparative Example 1 | 69.70 | 1.63 | 61 | 110-112 | 2.32 | 1334 |

| | | | | | | |
|---|---|---|---|---|---|---|
| Comparative Example 2 | 92.50 | 1.44 | 92 | 81-83 | 5.58 | 1160 |
| Comparative Example 3 | 14.00 | 1.59 | 89 | 77-79 | 4.72 | 1220 |
| Comparative Example 4 | 15.00 | 1.52 | 88 | 80-82 | 4.83 | 1245 |

As can be seen from the data above, in Examples 1-5, the xylose extraction rate can reach 90% or so, and the yield of lignin is 90% or above, being apparently higher than those in comparative examples and also apparently higher than those in the prior art, for example, CN103061179B, CN103074790B, CN103898785B and CN103898786B. The ash content is lower than 2%, the purity is high, the preparation method is simple, and there is no need for multiple separations.

The foregoing only shows the principle of the present invention. It should be understood that the scope of the present invention is not intended to be limited to the exemplary aspects described herein, but should include all equivalents known currently and developed in future. In addition, it should be noted that several improvements and modifications can be made without departing from the technical principles of the present invention, and these improvements and modifications should also be regarded as the scope of the present invention.

## Claims

1. A method for separating xylose and lignin from a miscellaneous sugar liquid, comprising the following steps:
hydrolysis step: adding the miscellaneous sugar liquid and a solvent to a reactor, adding an acid catalyst, and carrying out a hydrolysis reaction; and
separation step: after the hydrolysis reaction is completed, separating the solvent phase from the water phase, and
carrying out chromatography, ion exchange and crystallization on the separated water phase to obtain the pure xylose; and
recycling the separated solvent phase moiety for the next batch of hydrolysis step, and after a solid content in the solvent reaches 50% or above, using a vacuum evaporation facility to recover the solvent, reusing the recovered solvent as the solvent for the hydrolysis step, and obtaining the pure lignin after recovering the solvent by vacuum evaporation.

2. The method according to claim 1, wherein
the miscellaneous sugar liquid comprises a sugar component accounting for 20-40% of the total miscellaneous sugar liquid, wherein a monosaccharide in the sugar component accounts for 5-15% of the total sugar component, and a polysaccharide accounts for 85-95% of the total sugar component; and
in addition to the monosaccharide and the polysaccharide, the miscellaneous sugar liquid comprises lignin accounting for 60-70% of the total miscellaneous sugar liquid and a dissolved salt component.

3. The method according to any of claims 1-2, wherein the solvent used in the hydrolysis step comprises: one or a combination of two or more of MIBK, n-butanol, toluene and isophorone.

4. The method according to any of claims 1-3, wherein in the hydrolysis step, a mass ratio of the miscellaneous sugar liquid to the solvent is 1:1-4:1.

5. The method according to any of claims 1-4, wherein in the hydrolysis step, the acid catalyst comprises one or a combination of two or more of sulfuric acid, hydrochloric acid, nitric acid and phosphoric acid.

6. The method according to any of claims 1-5, wherein in the hydrolysis step, relative to the total mass of the miscellaneous sugar liquid, the acid catalyst is in an amount of 3-6% by mass of the miscellaneous sugar liquid.

7. The method according to any of claims 1-6, wherein in the hydrolysis step, the hydrolysis reaction is carried out at 90-120°C for 1-5 h.

8. The method according to any of claims 1-7, wherein in the separation step, the separated solvent phase moiety is recycled for the next batch of hydrolysis step for up to 8 times; and when the solid content in the solvent reaches 50% or above, the vacuum evaporation facility is used to recover the solvent and separate the lignin.

9. The method according to any of claims 1-8, wherein in the separation step, a solvent recovery rate is up to 99.5% or above.
